# EUROPEAN PATENT APPLICATION

(11) **EP 4 145 213 A1**
(43) Date of publication of application: **08.03.2023**
(21) Application number: 21797630.7
(22) Date of filing: 15.04.2021
(51) Int. Cl.: G02B 30/31, B60K 35/00, G02B 27/01, G09G 5/00, G09G 5/36, H04N 5/64, H04N 13/312, H04N 13/346, H04N 13/363, H04N 13/366

(54) **IMAGE DISPLAY SYSTEM**

(30) Priority: 30.04.2020 JP 2020080749
(71) Applicant: Kyocera Corporation, Kyoto-shi Kyoto 612-8501 (JP)
(72) Inventor: KUSAFUKA, Kaoru, Kyoto-shi, Kyoto 612-8501 (JP); SATOU, Akinori, Kyoto-shi, Kyoto 612-8501 (JP); HASHIMOTO, Sunao, Kyoto-shi, Kyoto 612-8501 (JP)
(74) Representative: TBK
(86) International application number: PCT/JP2021/015624
(87) International publication number: WO 2021/220833

(57) **Abstract**

An image display system includes a display, a barrier, a second mirror that has a changeable reflection angle for reflecting and projecting image light, a first controller that controls a change in the reflection angle, a camera that captures an image of a face of a driver, and a second controller that clips out a target area from a captured image output from the camera. The second controller shifts the target area as the first controller changes the reflection angle.

## Description

### TECHNICAL FIELD

The present disclosure relates to an image display system.

### BACKGROUND OF INVENTION

A known technique is described in, for example, Patent Literature 1.

### CITATION LIST

### PATENT LITERATURE

Patent Literature 1: Japanese Unexamined Patent Application Publication No. 2001-166259

### SUMMARY

In one embodiment of the present disclosure, an image display system includes a display, a barrier, a reflecting mirror, a first controller, a camera, and a second controller. The display displays a parallax image projected toward two eyes of a person through an optical system. The barrier defines a traveling direction of image light of the parallax image to provide parallax between the two eyes. The reflecting mirror has a changeable reflection angle for reflecting and projecting the image light. The first controller controls a change in the reflection angle. The camera captures an image of a face of the person. The second controller clips out a target area from a captured image output from the camera. The second controller shifts the target area as the first controller changes the reflection angle.

### BRIEF DESCRIPTION OF THE DRAWINGS

The objects, features, and advantages of the present disclosure will become more apparent from the following detailed description and the drawings.

FIG. 1 is a schematic diagram of an example movable body incorporating an image display system.
FIG. 2 is a schematic diagram of an example image display system.
FIG. 3 is a schematic diagram describing the relationship between the eyes of a driver, a display, and a barrier.
FIG. 4 is a flowchart of an example pupil position detection process.
FIG. 5 is a flowchart of an example clipping process.
FIG. 6 is a flowchart of another example clipping process.

### DESCRIPTION OF EMBODIMENTS

An image display system with the structure that forms the basis of an image display system according to one or more embodiments of the present disclosure obtains positional data indicating the position of a pupil using an image of a user's eye(s) captured with a camera to detect the position of the user's eye(s). For example, a three-dimensional (3D) display device displays images on a display based on pupil positions indicated by the positional data to allow the left eye and the right eye of the user to view the corresponding images.

An embodiment of the present disclosure will now be described in detail with reference to the drawings. The drawings used herein are schematic and are not drawn to scale relative to the actual size of each component.

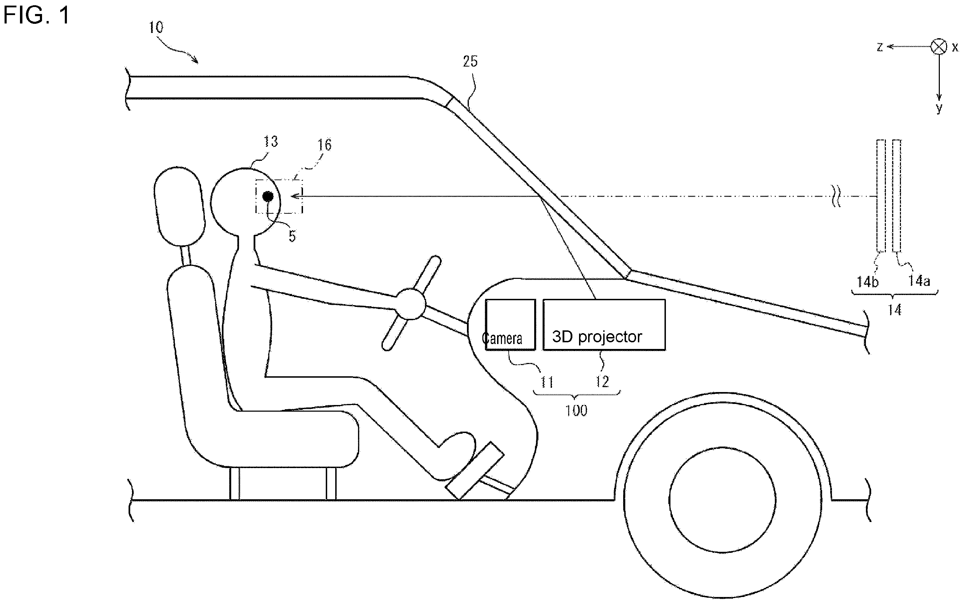

As illustrated in FIG. 1, an image display system 100 according to one embodiment of the present disclosure may be incorporated in a movable body 10. The image display system 100 includes a camera 11 and a 3D projector 12.

Examples of the movable body in the present disclosure include a vehicle, a vessel, and an aircraft. Examples of the vehicle include an automobile, an industrial vehicle, a railroad vehicle, a community vehicle, and a fixed-wing aircraft traveling on a runway. Examples of the automobile include a passenger vehicle, a truck, a bus, a motorcycle, and a trolley bus. Examples of the industrial vehicle include an industrial vehicle for agriculture and an industrial vehicle for construction. Examples of the industrial vehicle include a forklift and a golf cart. Examples of the industrial vehicle for agriculture include a tractor, a cultivator, a transplanter, a binder, a combine, and a lawn mower. Examples of the industrial vehicle for construction include a bulldozer, a scraper, a power shovel, a crane vehicle, a dump truck, and a road roller. Examples of the vehicle may include man-powered vehicles. The classification of the vehicle is not limited to the above examples. Examples of the automobile include an industrial vehicle travelling on a road. One type of vehicle may fall within a plurality of classes. Examples of the vessel include a jet ski, a boat, and a tanker. Examples of the aircraft include a fixed-wing aircraft and a rotary-wing aircraft.

In the example described below, the movable body 10 is a passenger vehicle. The movable body 10 may be any of the above examples instead of a passenger vehicle. The camera 11 may be attached to the movable body 10. The camera 11 captures an image including a face of a driver 13 of the movable body 10 (a person's face). The camera 11 may be attached at any position inside or outside the movable body 10. For example, the camera 11 may be inside a dashboard in the movable body 10.

The camera 11 may be a visible light camera or an infrared camera. The camera 11 may function both as a visible light camera and an infrared camera. The camera 11 may include, for example, a charge-coupled device (CCD) image sensor or a complementary metal-oxide semiconductor (CMOS) image sensor.

The camera 11 outputs a captured image to the 3D projector 12. The 3D projector 12 may control an image to be projected based on the captured image output from the camera 11. The camera 11 may output a captured image to the 3D projector 12 through wired communication or wireless communication. The wired communication may include, for example, a controller area network (CAN).

The 3D projector 12 may be at any position inside or outside the movable body 10. For example, the 3D projector 12 may be inside the dashboard in the movable body 10. The 3D projector 12 emits image light toward a windshield 25.

The windshield 25 reflects image light emitted from the 3D projector 12. The image light reflected from the windshield 25 reaches an eye box 16. The eye box 16 is an area in a real space in which the eyes 5 of the driver 13 are expected to be based on, for example, the body shape, posture, and changes in the posture of the driver 13. The eye box 16 may have any shape. The eye box 16 may include a planar area or a 3D area. The solid arrow in FIG. 1 indicates a path traveled by at least a part of image light emitted from the 3D projector 12 to reach the eye box 16. The path traveled by image light is also referred to as an optical path. With the eyes 5 of the driver 13 located in the eye box 16 receiving image light, the driver 13 can view a virtual image 14. The virtual image 14 is on a path extending frontward from the movable body 10 in alignment with the path from the windshield 25 to the eyes 5 (in the figure, the straight dot-dash line). The 3D projector 12 can function as a head-up display that enables the driver 13 to view the virtual image 14. In FIG. 1, the direction in which the eyes 5 of the driver 13 are aligned corresponds to x-direction. The vertical direction corresponds to y-direction. The imaging range of the camera 11 includes the eye box 16.

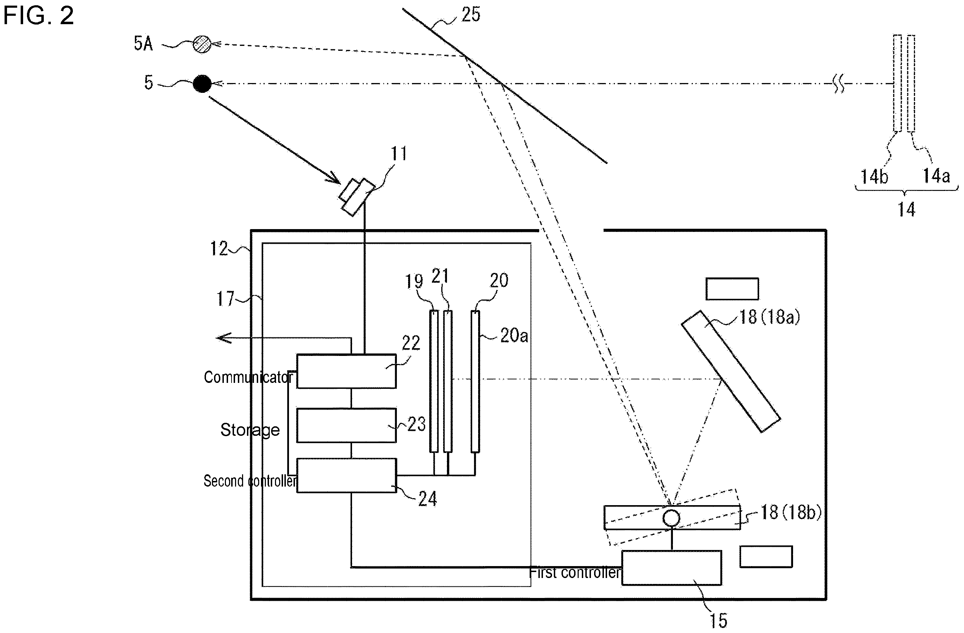

As illustrated in FIG. 2, the 3D projector 12 includes a 3D display device 17, an optical element 18, and a first controller 15. The 3D projector 12 may also be referred to as an image display module. The 3D display device 17 may include a backlight 19, a display 20 including a display surface 20a, a barrier 21, and a second controller 24. The 3D display device 17 may further include a communicator 22. The 3D display device 17 may further include a storage 23.

The image captured with the camera 11 is output to the 3D projector 12. The second controller 24 detects the positions of the eyes 5 of the driver 13 based on the captured image output from the camera 11. The positions of the eyes 5 of the driver 13 may be represented by the positions of pupils. The image captured with the camera 11 includes, for example, the face of the driver 13 seated in a seat of the movable body 10. As a target area to be clipped out of the captured image and output, the second controller 24 clips out a first area including an eyellipse or the eye box 16. When the eye box 16 shifts, the second controller 24 may shift the first area accordingly. The second controller 24 may clip out the target area intermittently, for example, at regular time intervals. The second controller 24 may clip out the target area once, for example, before image light is emitted after the image display system 100 is started. The second controller 24 detects pupils in the clipped-out first area and determines the coordinates of the detected pupil positions. The second controller 24 may also determine whether the face of the driver 13 is detected in the clipped-out first area. Once the face is detected, the second controller 24 may clip a second area including the detected face out of the first area. The second controller 24 detects pupils in the clipped-out second area and determines the coordinates of the detected pupil positions.

The 3D projector 12 may include, for example, a sensor. The sensor may be, for example, an ultrasonic sensor or an optical sensor. The camera 11 may detect the position of the head of the driver 13 with a sensor, and may detect the positions of the eyes 5 of the driver 13 based on the position of the driver's head. The camera 11 may use two or more sensors to detect the positions of the eyes 5 of the driver 13 as coordinates in a 3D space.

The optical element 18 may include a first mirror 18a and a second mirror 18b. At least one of the first mirror 18a or the second mirror 18b may have optical power. In the present embodiment, the first mirror 18a is a concave mirror having optical power. The second mirror 18b is a plane mirror. The optical element 18 may function as a magnifying optical system that magnifies an image displayed by the 3D display device 17. The two-dot-dash arrow in FIG. 2 indicates a path traveled by at least a part of image light emitted from the 3D display device 17 to be reflected from the first mirror 18a and the second mirror 18b and then exit the 3D projector 12. The image light emitted from the 3D projector 12 reaches the windshield 25, is reflected from the windshield 25, and then reaches the eyes 5 of the driver 13. This allows the driver 13 to view the image displayed by the 3D display device 17. The windshield 25 reflects emitted image light.

The optical element 18 and the windshield 25 allow image light emitted from the 3D display device 17 to reach the eyes 5 of the driver 13. The optical element 18 and the windshield 25 may form an optical system. The optical system allows image light emitted from the 3D display device 17 to travel along the optical path indicated by the dot-dash line and reach the eyes 5 of the driver 13. The optical system may control the traveling direction of image light to magnify or reduce an image viewable by the driver 13. The optical system may control the traveling direction of image light to deform an image viewable by the driver 13 based on a predetermined matrix.

In the 3D projector 12, the optical element 18 is a reflecting mirror with a changeable reflection angle for reflecting and projecting image light. The eye box 16 shifts in accordance with the change in the reflection angle. Either or both the reflection angles of the first mirror 18a and the second mirror 18b may be changeable. The reflection angle of the first mirror 18a may be changeable, whereas the reflection angle of the second mirror 18b may be fixed. The reflection angle of the second mirror 18b may be changeable, whereas the reflection angle of the first mirror 18a may be fixed. In the present embodiment, the reflection angle of the first mirror 18a is fixed, and the reflection angle of the second mirror 18b is changeable. The reflection angle of the second mirror 18b may be changeable by, for example, applying a rotational driving force to a rotary shaft of the second mirror 18b. The rotational driving force may be applied to the rotary shaft by, for example, a motor, such as a servomotor or a stepping motor. The first controller 15 controls the change in the reflection angle of the reflecting mirror. In the present embodiment, the first controller 15 may control a motor operation to change the reflection angle of the second mirror 18b.

For example, the height of the positions of the eyes 5 varies depending on the body shape and posture of the driver 13. When the height of the positions of the eyes 5 varies, the 3D projector 12 may vary the optical path of image light to match the height. When the reflection angle of the second mirror 18b is changed, the optical path of image light emitted toward the windshield 25 changes. A change in the optical path of image light changes at least one of the angle of incidence or the point of incidence of image light on the windshield 25. This changes the optical path of light reflected from the windshield 25. For the same driver 13, varying the height of the seat of the movable body 10 varies the height of the positions of the eyes 5. In such cases as well, the optical path of image light may be changed by changing the reflection angle of the second mirror 18b.

The image display system 100 may include an input device for inputting instructions to change the reflection angle of the second mirror 18b. The input device is incorporated in the movable body 10 in a manner operable by the driver 13. When the driver 13 inputs an instruction to the first controller 15 by operating the input device, the first controller 15 changes the reflection angle of the second mirror 18b in response to the received instruction. The first controller 15 may include, for example, a microcomputer or an integrated circuit (IC ) for motor control such as a motor driver.

The optical element 18 may have a structure different from the illustrated structure. The optical element 18 may include a concave mirror, a convex mirror, or a plane mirror. The concave mirror or the convex mirror may be at least partially spherical or aspherical. The optical element 18 may be one element or may include three or more elements, instead of two elements. The optical element 18 may include a lens instead of a mirror. The lens may be a concave lens or a convex lens. The lens may be at least partially spherical or aspherical.

When the reflection angle of the second mirror 18b is changed, the position of the face of the driver 13, or specifically the height of the positions of the eyes 5 of the driver 13 is likely to have changed. The second controller 24, after a change in the reflection angle, may search for the target area in the captured image and shift the first-area clipping position from the position before the change in the reflection angle. When the reflection angle of the second mirror 18b remains unchanged, the first area may remain unshifted because the position of the face of the driver 13, or specifically the height of the positions of the eyes 5 of the driver 13, is expected to be unshifted. The second controller 24 may, for example, clip out the target area at the same clipping position as in the previous clipping without searching for the target area in the captured image. For example, when the reflection angle of the second mirror 18b is changed with the first-area clipping position unshifted, the position of the face and the positions of the eyes 5 of the driver 13 within the clipped-out first area differ from their previous positions. The position of the face or the positions of the eyes 5 being different from the positions in the previous clipping increase the volume of calculation involved in face detection and pupil detection after the clipping of the first area, and thus lengthen the time taken for their detection. Shifting the first-area clipping position by the second controller 24 upon a change in the reflection angle of the second mirror 18b allows the first-area clipping position to follow the shift of the positions of the face and the eyes 5 of the driver 13. This reduces an increase in the volume of calculation involved in face detection and pupil detection, and thus reduces an increase in the time taken for their detection after the first area is clipped out.

The backlight 19 is more away from the driver 13 than the display 20 and the barrier 21 are on the optical path of image light. The backlight 19 emits light toward the barrier 21 and the display 20. At least a part of light emitted from the backlight 19 travels along the optical path indicated by the two-dot-dash line and reaches the eyes 5 of the driver 13. The backlight 19 may include a light-emitting diode (LED) or a light emitter such as an organic EL element and an inorganic EL element. The backlight 19 may have any structure that allows control of the light intensity and the light intensity distribution.

The display 20 includes a display panel. The display 20 may be, for example, a liquid-crystal device such as an LCD. In the present embodiment, the display 20 includes a transmissive liquid-crystal display panel. The display 20 is not limited to this, and may include any of various display panels.

The display 20 includes multiple pixels. The display 20 controls the transmittance of light from the backlight 19 incident on each of the pixels to emit image light that then reaches the eyes 5 of the driver 13. The driver 13 views an image formed by image light emitted from each pixel in the display 20.

The barrier 21 defines a traveling direction of incident light. As illustrated in FIG. 2, with the barrier 21 closer to the backlight 19 than to the display 20, light emitted from the backlight 19 enters the barrier 21 and then enters the display 20. In this case, the barrier 21 blocks or attenuates a part of light emitted from the backlight 19 and transmits another part of the light to the display 20. The display 20 emits incident light traveling in a direction defined by the barrier 21 as image light traveling in the same direction. With the display 20 closer to the backlight 19 than to the barrier 21, light emitted from the backlight 19 enters the display 20 and then enters the barrier 21. In this case, the barrier 21 blocks or attenuates a part of image light emitted from the display 20 and transmits another part of the image light to the eyes 5 of the driver 13.

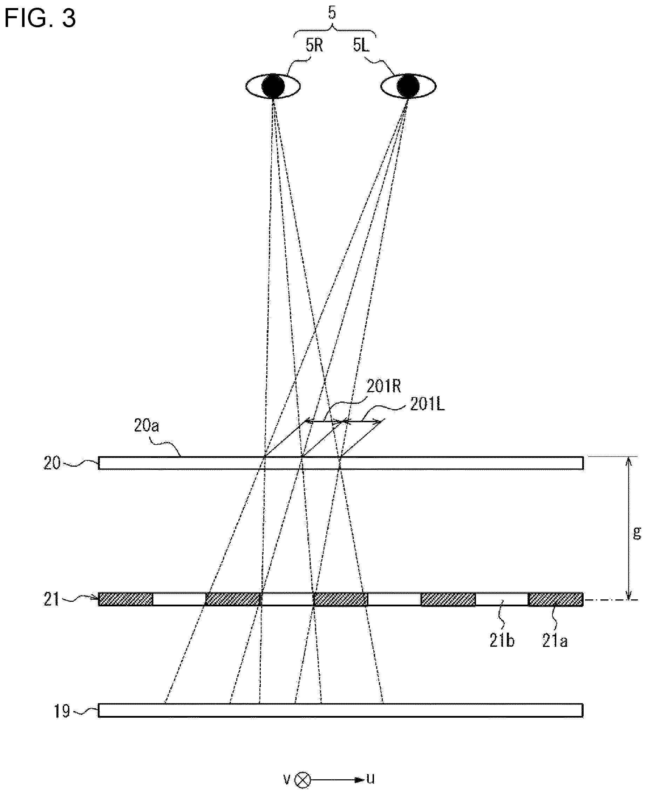

Irrespective of whether the display 20 or the barrier 21 is closer to the driver 13, the barrier 21 can control the traveling direction of image light. The barrier 21 allows a part of image light emitted from the display 20 to reach one of the left eye 5L and the right eye 5R (refer to FIG. 3) of the driver 13, and another part of the image light to reach the other of the left eye 5L and the right eye 5R of the driver 13. In other words, the barrier 21 directs at least a part of image light toward the left eye 5L of the driver 13 and toward the right eye 5R of the driver 13. The left eye 5L is also referred to as a first eye, and the right eye 5R as a second eye. In the present embodiment, the barrier 21 is located between the backlight 19 and the display 20. In other words, light emitted from the backlight 19 first enters the barrier 21 and then enters the display 20.

The barrier 21 defines a traveling direction of image light to allow each of the left eye 5L and the right eye 5R of the driver 13 to receive different image light. Each of the left eye 5L and the right eye 5R of the driver 13 can thus view a different image.

As illustrated in FIG. 3, the display 20 includes left-eye viewing areas 201L viewable by the left eye 5L of the driver 13 and right-eye viewing areas 201R viewable by the right eye 5R of the driver 13 on the display surface 20a. The display 20 displays a parallax image including left-eye images viewable by the left eye 5L of the driver 13 and right-eye images viewable by the right eye 5R of the driver 13. A parallax image refers to an image projected toward the left eye 5L and the right eye 5R of the driver 13 to provide parallax between the two eyes of the driver 13. The display 20 displays left-eye images on the left-eye viewing areas 201L and right-eye images on the right-eye viewing areas 201R. In other words, the display 20 displays a parallax image on the left-eye viewing areas 201L and the right-eye viewing areas 201R. The left-eye viewing areas 201L and the right-eye viewing areas 201R are arranged in u-direction indicating a parallax direction. The left-eye viewing areas 201L and the right-eye viewing areas 201R may extend in v-direction orthogonal to the parallax direction, or in a direction inclined with respect to v-direction at a predetermined angle. In other words, the left-eye viewing areas 201L and the right-eye viewing areas 201R may be arranged alternately in a predetermined direction including a component in the parallax direction. The pitch between the alternately arranged left-eye viewing areas 201L and right-eye viewing areas 201R is also referred to as a parallax image pitch. The left-eye viewing areas 201L and the right-eye viewing areas 201R may be spaced from each other or adjacent to each other. The display 20 may further include a display area to display a planar image on the display surface 20a. The planar image provides no parallax between the eyes 5 of the driver 13 and is not viewed stereoscopically.

As illustrated in FIG. 3, the barrier 21 includes open portions 21b and light-blocking portions 21a. The barrier 21 located closer to the driver 13 than the display 20 is on the optical path of image light controls the transmittance of image light emitted from the display 20. The open portions 21b transmit light entering the barrier 21 from the display 20. The open portions 21b may transmit light with a transmittance of a first predetermined value or greater. The first predetermined value may be, for example, 100% or a value close to 100%. The light-blocking portions 21a block light entering the barrier 21 from the display 20. The light-blocking portions 21a may transmit light with a transmittance of a second predetermined value or less. The second predetermined value may be, for example, 0% or a value close to 0%. The first predetermined value is greater than the second predetermined value.

The open portions 21b and the light-blocking portions 21a are arranged alternately in u-direction indicating the parallax direction. The boundaries between the open portions 21b and the light-blocking portions 21a may extend in v-direction orthogonal to the parallax direction as illustrated in FIG. 3, or in a direction inclined with respect to v-direction at a predetermined angle. In other words, the open portions 21b and the light-blocking portions 21a may be arranged alternately in a predetermined direction including a component in the parallax direction.

In the present embodiment, the barrier 21 is more away from the driver 13 than the display 20 is on the optical path of image light. The barrier 21 controls the transmittance of light directed from the backlight 19 to the display 20. The open portions 21b transmit light directed from the backlight 19 to the display 20. The light-blocking portions 21a block light directed from the backlight 19 to the display 20. This structure allows light entering the display 20 to travel in a predetermined direction. Thus, the barrier 21 can control a part of image light to reach the left eye 5L of the driver 13, and another part of the image light to reach the right eye 5R of the driver 13.

The barrier 21 may include a liquid crystal shutter. The liquid crystal shutter can control the transmittance of light in accordance with a voltage applied. The liquid crystal shutter may include multiple pixels and control the transmittance of light for each pixel. A liquid crystal shutter can form an area with a high light transmittance or an area with a low light transmittance in an intended shape. The open portions 21b in the barrier 21 including a liquid crystal shutter may have a transmittance of the first predetermined value or greater. The light-blocking portions 21a in the barrier 21 including a liquid crystal shutter may have a transmittance of the second predetermined value or less. The first predetermined value may be greater than the second predetermined value. The ratio of the second predetermined value to the first predetermined value may be set to 1/100 in one example. The ratio of the second predetermined value to the first predetermined value may be set to 1/1000 in another example. The barrier 21 including the open portions 21b and the light-blocking portions 21a that can shift is also referred to as an active barrier.

The second controller 24 controls the display 20. The second controller 24 may control the barrier 21 that is an active barrier. The second controller 24 may control the backlight 19. The second controller 24 determines the position coordinates of the pupils of the eyes 5 of the driver 13, and controls the display 20 based on the coordinate information. The second controller 24 may control at least one of the barrier 21 or the backlight 19 based on the coordinate information.

The second controller 24 may be, for example, a processor. The second controller 24 may include one or more processors. The processors may include a general-purpose processor that reads a specific program to perform a specific function, and a processor dedicated to specific processing. The dedicated processor may include an application-specific integrated circuit (ASIC). The processors may include a programmable logic device (PLD). The PLD may include a field-programmable gate array (FPGA). The second controller 24 may be a system on a chip (SoC) or a system in a package (SiP) in which one or more processors cooperate with other components. The second controller 24 may perform the functions of the first controller 15, and the first controller 15 may be included in the second controller 24. The second controller 24 may be divided into multiple processors incorporated in multiple devices. One of the multiple processors in the second controller 24 may be incorporated in the camera 11. The second controller 24 incorporated in the camera 11 may be integrated with a processor controlling the camera 11. In the second controller 24, for example, a processor shifting the first area may be separated from a processor clipping out the first area from the captured image.

The communicator 22 may include an interface that can communicate with an external device. The external device may, for example, provide information about images to be displayed on the display 20. The communicator 22 may obtain various information from the external device and output the information to the second controller 24. The interface that can perform communication in the present disclosure may include, for example, a physical connector and a wireless communication device. The physical connector may include an electric connector for transmission with electric signals, an optical connector for transmission with optical signals, and an electromagnetic connector for transmission with electromagnetic waves. The electric connector may include a connector complying with IEC 60603, a connector complying with the USB standard, or a connector used for an RCA terminal. The electric connector may include a connector used for an S terminal specified by EIAJ CP-121aA or a connector used for a D terminal specified by EIAJ RC-5237. The electric connector may include a connector complying with the HDMI (registered trademark) standard or a connector used for a coaxial cable including a British Naval Connector, also known as, for example, a Baby-series N Connector (BNC). The optical connector may include a connector complying with IEC 61754. The wireless communication device may include a wireless communication device complying with the Bluetooth (registered trademark) standard and a wireless communication device complying with other standards including IEEE 8021a. The wireless communication device includes at least one antenna.

The storage 23 may store various information sets or programs for causing the components of the 3D display device 17 to operate. The storage 23 may include, for example, a semiconductor memory. The storage 23 may function as a work memory for the second controller 24. The second controller 24 may include the storage 23.

As illustrated in FIG. 3, light emitted from the backlight 19 transmits through the barrier 21 and the display 20 to reach the eyes 5 of the driver 13. The broken lines indicate the paths traveled by light from the backlight 19 to reach the eyes 5. The light through the open portions 21b in the barrier 21 to reach the right eye 5R transmits through the right-eye viewing areas 201R in the display 20. In other words, light through the open portions 21b allows the right eye 5R to view the right-eye viewing areas 201R. The light through the open portions 21b in the barrier 21 to reach the left eye 5L transmits through the left-eye viewing areas 201L in the display 20. In other words, light through the open portions 21b allows the left eye 5L to view the left-eye viewing areas 201L.

The display 20 displays right-eye images on the right-eye viewing areas 201R and left-eye images on the left-eye viewing areas 201L. Thus, the barrier 21 allows image light for the left-eye images to reach the left eye 5L and image light for the right-eye images to reach the right eye 5R. More specifically, the open portions 21b allow image light for the left-eye images to reach the left eye 5L of the driver 13 and image light for the right-eye images to reach the right eye 5R of the driver 13. The 3D display device 17 with this structure can project a parallax image to the two eyes of the driver 13. The driver 13 views a parallax image with the left eye 5L and the right eye 5R to view the image stereoscopically.

Image light transmitting through the open portions 21b in the barrier 21 and emitted from the display surface 20a of the display 20 at least partially reaches the windshield 25 through the optical element 18. The image light is reflected from the windshield 25 and reaches the eyes 5 of the driver 13. This allows the eyes 5 of the driver 13 to view a second virtual image 14b located more away in the negative z-direction than the windshield 25. The second virtual image 14b corresponds to the image appearing on the display surface 20a. The open portions 21b and the light-blocking portions 21a in the barrier 21 form a first virtual image 14a in front of the windshield 25 and more away in the negative z-direction than the second virtual image 14b. As illustrated in FIG. 1, the driver 13 can view an image with the display 20 appearing to be at the position of the second virtual image 14b and the barrier 21 appearing to be at the position of the first virtual image 14a.

The 3D display device 17 emits image light for the image appearing on the display surface 20a in a direction defined by the barrier 21. The optical element 18 directs the image light to the windshield 25. The optical element 18 may reflect or refract the image light. The windshield 25 reflects the image light to direct the light to the eyes 5 of the driver 13. The image light entering the eyes 5 of the driver 13 causes the driver 13 to view a parallax image as a virtual image 14. The driver 13 views the virtual image 14 stereoscopically. An image corresponding to the parallax image in the virtual image 14 is also referred to as a parallax virtual image. A parallax virtual image is a parallax image projected through the optical system. An image corresponding to the planar image in the virtual image 14 is also referred to as a planar virtual image. A planar virtual image is a planar image projected through the optical system.

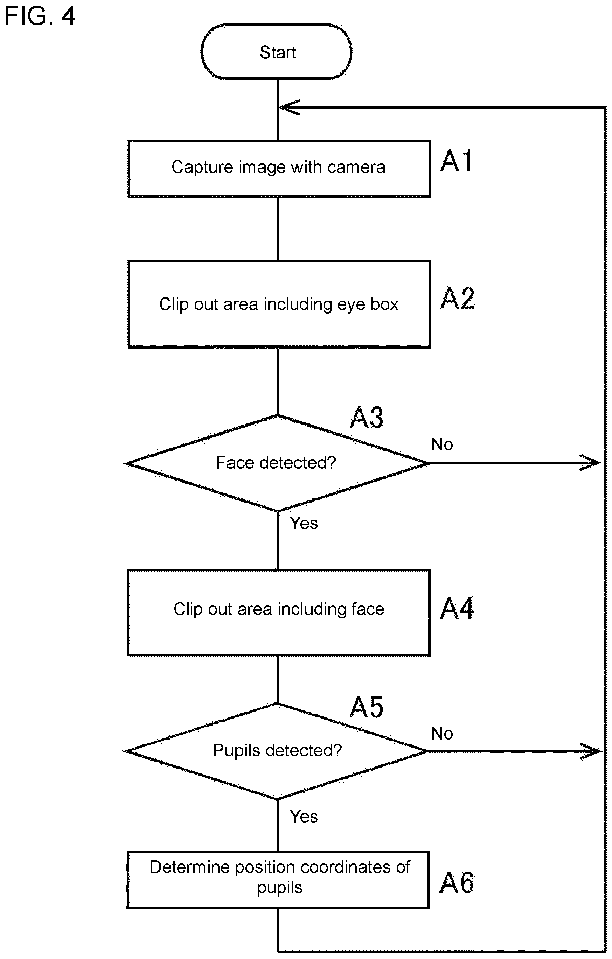

A pupil position detection process will now be described with reference to a flowchart. The second controller 24 may, for example, perform the pupil position detection process shown in the flowchart in FIG. 4. The second controller 24 may start the pupil position detection process, for example, upon the startup (power-on) of the image display system 100. In step A1, the second controller 24 obtains an image captured with the camera 11 and outputs the image to the second controller 24. The image captured with the camera 11 includes, for example, the face of the driver 13 seated in a seat of the movable body 10. In step A2, the second controller 24 clips out the first area including the eye box 16. In step A3, the second controller 24 performs face detection in the clipped-out first area and determines whether the face of the driver is detected. Upon detecting the face, the second controller 24 advances to step A4. Upon failing to detect the face, the second controller 24 returns to step A1, and the camera 11 captures an image again.

In step A4, the second controller 24 clips out the second area including the detected face out of the first area. In step A5, the second controller 24 performs pupil detection in the second area and determines whether the pupils of the driver 13 are detected. Upon detecting the pupils, the second controller 24 advances to step A6. Upon failing to detect the pupils, the second controller 24 returns to step A1, and the camera 11 captures an image again. In step A6, the second controller 24 determines the position coordinates of the pupils and returns to step A1. The second controller 24 controls the display 20 and other components to project the image light of a parallax image based on the position coordinates of the pupils determined.

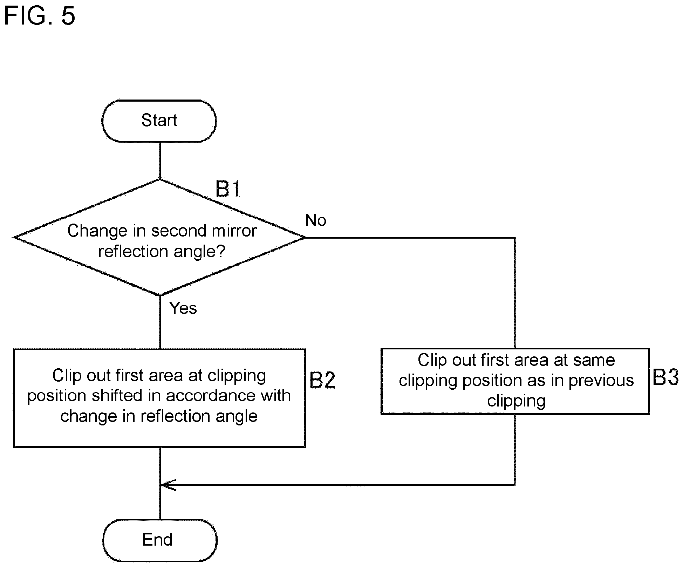

An example clipping process performed on a captured image will now be described with reference to a flowchart. The second controller 24 may, for example, perform the clipping process shown in the flowchart in FIG. 5. The second controller 24 may, for example, perform the clipping process in accordance with this flowchart in clipping out the first area in step A2 of the pupil position detection process in accordance with the flowchart in FIG. 4.

First, in step B 1, the second controller 24 determines whether the reflection angle of the second mirror 18b has changed. A change in the reflection angle causes the processing to advance to step B2. No change causes the processing to advance to step B3. The second controller 24 may determine whether the reflection angle of the second mirror 18b has changed based on whether the first controller 15 has controlled the reflection angle of the second mirror 18b to change the angle. The first controller 15 may, for example, notify the second controller 24 that the first controller 15 has controlled the reflection angle of the second mirror 18b to change the angle. The second controller 24 may determine, based on this notification, that the first controller 15 has controlled the reflection angle of the second mirror 18b to change the angle.

In step B2, the second controller 24 may shift the first-area clipping position to match the change in the reflection angle. The second controller 24 clips out the first area at the shifted clipping position. In step B2, the second controller 24 may search for the first area in the captured image as appropriate. Step B3 is a process to be performed when the reflection angle of the second mirror 18b is unchanged. In step B3, the second controller 24 may use the same clipping position as in the previous clipping without searching for the first area. In step B3, the second controller 24 clips out the first area at the same clipping position as in the previous clipping.

The magnitude of change in the reflection angle is expected to reflect the magnitude of change in the height of the positions of the eyes 5 of the driver 13. The first controller 15 may notify, when the first controller 15 has controlled the reflection angle of the second mirror 18b to change the angle, the second controller 24 of the magnitude of change in the reflection angle. The second controller 24 may determine, based on this notification of the magnitude of change, that the first controller 15 has controlled the reflection angle of the second mirror 18b to change the angle. When the first controller 15 notifies the second controller 24 of the magnitude of change in the reflection angle, the second controller 24 may shift the first-area clipping position to match the difference between the previous clipping position and the new clipping position with the magnitude of change in the reflection angle. In this case, the second controller 24 may eliminate the search for the first area in the captured image in performing step B2.

The first controller 15 may notify, when the first controller 15 has controlled the reflection angle of the second mirror 18b to change the angle, the second controller 24 of angle information indicating the new reflection angle. The second controller 24 may determine, based on this notification of the angle information, that the first controller 15 has controlled the reflection angle of the second mirror 18b to change the angle. When the first controller 15 notifies the second controller 24 of the angle information, the second controller 24 may shift the first-area clipping position to match the angle information. In this case, the second controller 24 may eliminate the search for the first area in the captured image in performing step B2.

When the first controller 15 has controlled the reflection angle of the second mirror 18b with an operation performed by the driver 13 to change the angle by the magnitude of change within a predetermined range, the second controller 24 may not shift the clipping position. In this case, the second controller 24 may clip out the first area using the same clipping position as in the previous clipping. In an embodiment using this process, the second controller 24 may compare the magnitude of change from the reflection angle at the time of setting the first area with a predetermined value. The magnitude of change from the reflection angle at the time of setting the first area is compared with the predetermined value to allow the second controller 24 to reduce deviation from a desirable clipping position resulting from a cumulative shift.

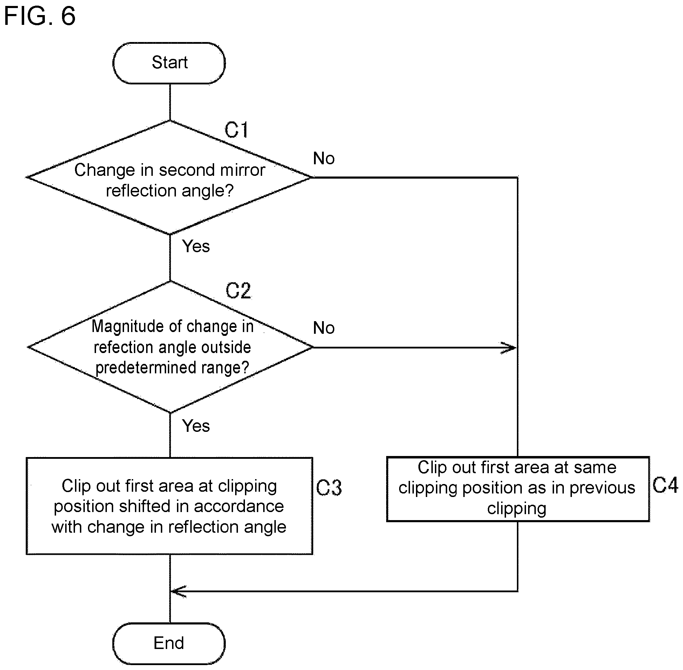

Another example clipping process performed on a captured image will now be described with reference to a flowchart. The second controller 24 may, for example, perform the clipping process shown in the flowchart in FIG. 6. The second controller 24 may, for example, perform the clipping process in accordance with this flowchart in clipping out the first area in step A2 of the pupil position detection process in accordance with the flowchart in FIG. 4.

First, in step C1, the second controller 24 determines whether the reflection angle of the second mirror 18b has changed. A change in the reflection angle causes the processing to advance to step C2. No change causes the processing to advance to step C4. The second controller 24, upon notification of the magnitude of change in the reflection angle from the first controller 15, may determine that the first controller 15 has controlled the reflection angle of the second mirror 18b to change the angle, as in step B1 of the flowchart in FIG. 5.

In step C2, the second controller 24 determines whether the magnitude of change in the reflection angle is outside the predetermined range. The magnitude of change being outside the predetermined range causes the processing to advance to step C3. The magnitude of change being within the predetermined range causes the processing to advance to step C4. The predetermined range used for the determination may be stored in advance into, for example, the storage 23. In step C3, the second controller 24 shifts the first-area clipping position to match the change in the reflection angle. The second controller 24 clips out the first area at the shifted clipping position. In step C3, the second controller 24 may search for the first area in the captured image as appropriate. Step C4 is a process to be performed when the reflection angle of the second mirror 18b is unchanged, or the magnitude of change in the reflection angle is within the predetermined range. In step C4, the second controller 24 may use the same clipping position as in the previous clipping. In step C4, the second controller 24 clips out the first area at the same clipping position as in the previous clipping.

The clipping position for clipping out the target area may, for example, be temporarily stored in the storage 23 while the image display system 100 is in operation. The clipping position stored in the storage 23 is updated when the clipping position is shifted.

The storage 23 may store the reflection angles of the second mirror 18b in association with the positions at which the target area is clipped out. As described above, the reflection angle of the second mirror 18b is likely to be changed when the driver 13 is replaced by another person. The reflection angle of the second mirror 18b is likely to be changed between drivers 13 in accordance with their preferences in the position of image light projected. With the storage 23 storing the reflection angles of the second mirror 18b in association with positions at which the target area is clipped out, when the first controller 15 changes the second mirror 18b to any one of the reflection angles stored in the storage 23, the second controller 24 may clip out the target area at the position associated with the reflection angle.

The structure according to the present disclosure is not limited to the structure described in the above embodiments, but may be changed or varied variously. For example, the functions of the components are reconfigurable unless any contradiction arises. Multiple components may be combined into a single unit or a single component may be divided into separate units.

The clipping process shown in the flowcharts in FIGs. 5 and 6 may, for example, be performed in the clipping of the second area in step A4 of the pupil position detection process shown in the flowchart in FIG. 4, instead of in the clipping of the first area in step A2. The clipping process shown in the flowcharts in FIGs. 5 and 6 may, for example, be performed in both the clipping of the second area in step A4 and the clipping of the first area in step A2 of the pupil position detection process shown in the flowchart in FIG. 4.

For example, when the reflection angle of the second mirror 18b is unchanged or the magnitude of change in the reflection angle is within a predetermined range, the second controller 24 may determine that the position coordinates of the pupils are the same as the previous position coordinates of the pupils, without searching for or clipping out the target area.

The drawings used herein are schematic and are not drawn to scale relative to the actual size of each component.

In the present disclosure, the first, the second, or others are identifiers for distinguishing the components. The identifiers of the components distinguished with the first, the second, and others in the present disclosure are interchangeable. For example, the first eye can be interchangeable with the second eye. The identifiers are to be interchanged together. The components for which the identifiers are interchanged are also to be distinguished from one another. The identifiers may be eliminated. The components without such identifiers can be distinguished with reference numerals. The identifiers such as the first and the second in the present disclosure alone should not be used to determine the order of components or to suggest the existence of smaller or larger number identifiers.

In the present disclosure, x-axis, y-axis, and z-axis are used for ease of explanation and may be interchangeable with one another. The orthogonal coordinate system including x-axis, y-axis, and z-axis is used to describe the structures according to the present disclosure. The positional relationship between the components in the present disclosure is not limited to being orthogonal.

The present disclosure may be implemented in the following forms.

In one embodiment of the present disclosure, an image display system includes a display, a barrier, a reflecting mirror, a first controller, a camera, and a second controller. The display displays a parallax image projected toward two eyes of a person through an optical system. The barrier defines a traveling direction of image light of the parallax image to provide parallax between the two eyes. The reflecting mirror has a changeable reflection angle for reflecting and projecting the image light. The first controller controls a change in the reflection angle. The camera captures an image of a face of the person. The second controller clips out a target area from a captured image output from the camera. The second controller shifts the target area as the first controller changes the reflection angle.

The image display system according to one embodiment of the present disclosure reduces the volume of calculation involved in pupil detection.

Although embodiments of the present disclosure have been described in detail, the present disclosure is not limited to the embodiments described above, and may be changed or varied in various manners without departing from the spirit and scope of the present disclosure. The components described in the above embodiments may be entirely or partially combined as appropriate unless any contradiction arises.

### REFERENCE SIGNS

- 5: eye (5L: left eye, 5R: right eye)
- 10: movable body
- 11: camera
- 12: 3D projector
- 13: driver
- 14: virtual image (14a: first virtual image, 14b: second virtual image)
- 15: first controller
- 16: eye box
- 17: three-dimensional (3D) display device
- 18: optical element (18a: first mirror, 18b: second mirror)
- 19: backlight
- 20: display (20a: display surface)
- 201L: left-eye viewing area
- 201R: right-eye viewing area
- 21: barrier (21a: light-blocking portion, 21b: open portion)
- 22: communicator
- 23: storage
- 24: second controller
- 25: windshield
- 100: image display system

## Claims

1. An image display system, comprising:
a display configured to display a parallax image projected toward two eyes of a person through an optical system;
a barrier configured to define a traveling direction of image light of the parallax image to provide parallax between the two eyes;
a reflecting mirror configured to have a changeable reflection angle for reflecting and projecting the image light;
a first controller configured to control a change in the reflection angle;
a camera configured to capture an image of a face of the person; and
a second controller configured to clip out a target area from a captured image output from the camera, the second controller being configured to shift the target area as the first controller changes the reflection angle.

2. The image display system according to claim 1, wherein
the target area clipped out by the second controller from the captured image includes the two eyes of the person.

3. The image display system according to claim 1 or claim 2, wherein
the second controller detects positions of pupils of the two eyes of the person from the clipped-out target area and controls the display in accordance with the detected positions of the pupils.

4. The image display system according to any one of claims 1 to 3, wherein
the second controller shifts the target area to be clipped out when magnitude of a change in the reflection angle changed by the first controller is outside a predetermined range.

5. The image display system according to any one of claims 1 to 4, wherein
the second controller does not shift the target area when magnitude of a change in the reflection angle changed by the first controller is within a predetermined range.

6. The image display system according to any one of claims 1 to 5, further comprising:
a storage configured to store reflection angles in association with positions at which the target area is clipped out,
wherein the second controller clips out, when the first controller changes the reflection angle to a reflection angle of the reflection angles stored in the storage, the target area at a position associated with the reflection angle of the reflection angles stored in the storage.
